# EUROPEAN PATENT APPLICATION

(11) **EP 2 098 826 A2**
(43) Date of publication of application: **09.09.2009**
(21) Application number: 09152816.6
(22) Date of filing: 13.02.2009
(51) Int. Cl.: G01C 21/36

(54) **Destination selection support device and destination selection support program**

(30) Priority: 06.03.2008 JP 2008056906
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: TBK-Patent

(57) **Abstract**

A navigation device uses a group display to display destination candidates that are chain stores as a group on a candidate display screen. However, where a destination candidate satisfies a specified extraction condition, such as being within a specified distance from a current position of a vehicle, being closest to a current position of a vehicle, or the like, the destination candidate is selected and displayed by an ordinary display, even though it would otherwise be displayed by a group display. For example, stores that are affiliates of an Eito-Irebun chain are displayed by a group display that says "Eito-Irebun". However, an Eito-Irebun Kinuta Store, which is an Eito-Irebun affiliate that satisfies a specified condition, is displayed by an ordinary display. Thus the navigation device displays the chain stores as a group, but by individually displaying a store that satisfies a specified extraction condition can be displayed without being grouped.

## Description

The present invention relates to a destination selection support device and a destination selection support program for setting a destination in a navigation device, for example.

In recent years, the guidance of vehicles by navigation devices has become increasingly common.
A navigation device has a function that searches for a route from a departure point to a destination, a function that detects a vehicle's position using the Global Positioning System (GPS) satellites and a sensor such as a gyroscope or the like, a function displays the vehicle's current position and the route to the destination on map, and the like.
Generally, a destination is input in cases where a navigation device searches for a route, searches for facilities in the vicinity of the current position and confirms information, and the like. In the destination input procedure, destination candidates that correspond to the characters that are input are found within a destination data file, and the destination candidates are displayed. The input is completed when one of the displayed destination candidates is selected.

Various types of proposals are known to have been made for efficiently performing the destination input.
For example, in a case where a search term matches the name of a chain store, a large number of individual destination candidates are found that begin with the same name, such as "Eito-Irebun XY Store" and the like. This creates a problem in that the display screen, which has a limited display area, is filled up with chain store names and the desired destination cannot be found.

A technology is proposed in Japanese Patent Application Publication No. JP-A-2005-037127 to address this problem. In a case where the destination is a chain store, the technology groups the chain stores under a representative name and displays only the representative name, thus preventing the display screen from being filled up by the names of the individual chain stores.

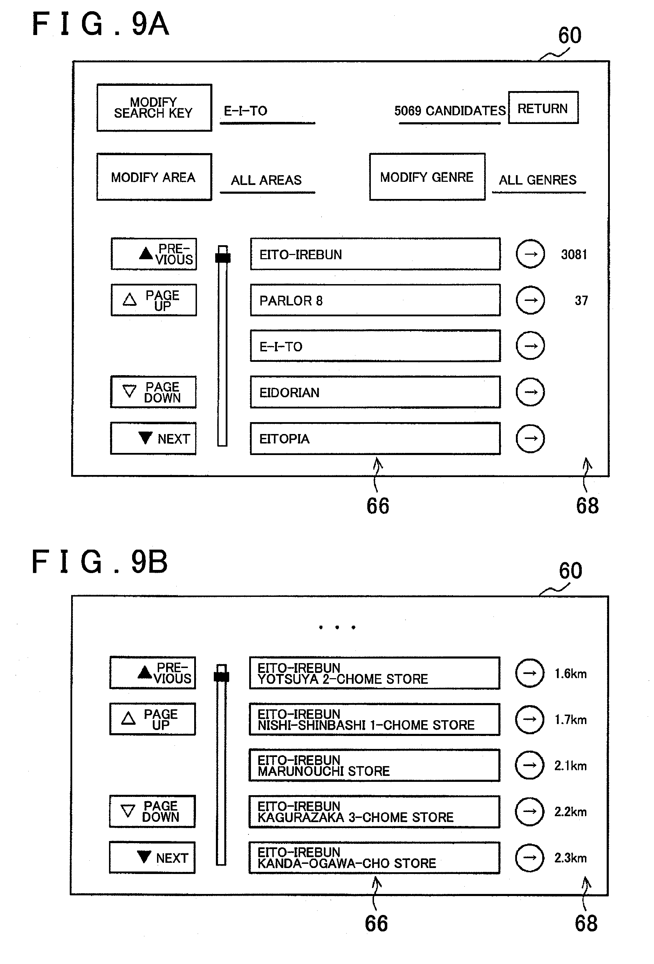

An example of a candidate display screen 60 that uses this technology is shown in FIG. 9A.
On the candidate display screen 60, search results are displayed as destination candidates in search results display spaces 66, but the results for the chain stores are displayed by a group display under the representative name, and the number of candidates is displayed in a comment space 68.
In the example in FIG. 9A, the destination candidates that are stores of the Eito-Irebun chain are displayed under the representative name "Eito-Irebun", and the number of the candidates is displayed as 3081.

Displaying the chain stores by a group display in this manner prevents the search results display spaces 66 from being filled up by the names of the individual chain stores and makes it possible to display the names of other candidates such as "Parlor 8", "Eito", and the like.
If the representative name is selected in the search results display spaces 66, the names of the individual chain stores are displayed as the destination candidates.
For example, in FIG. 9A, if the "Eito-Irebun" display space is selected by touch or the like, the names of the individual stores in the Eito-Irebun chain, such as "Eito-Irebun Yotsuya 2-Chome Store" and the like, are displayed as the destination candidates, as shown in FIG. 9B.

A problem with the technology described above is that in a case where the user wants to go to a specific chain store, the user must first select the representative name, which increases the number of operations.
For example, in a case where the user wants to set "Eito-Irebun Yotsuya 2-Chome Store" as the destination, the user must first select the representative name "Eito-Irebun", then search for "Eito-Irebun Yotsuya 2-Chome Store" among the individual store names that are displayed and set the destination.
Moreover, in a case where many chain stores are displayed, the user must find the desired chain store buried among the large number of the stores that are displayed.

Accordingly, it is an object of the present invention to perform the selection of the desired destination efficiently.
This object is solved by a destination selection support device as set out in claim 1, or by a destination selection support program as set out in claim 5, or further alternatively by a destination selection support method as set out in claim 6.
Advantageous developments are set out in the dependent claims.

In the present invention according to a first aspect, the destination candidates that are grouped and that satisfy a specified condition are displayed individually, which makes it possible to select the destination efficiently.
In the present invention according to a second aspect, the grouped destination candidates can be selected as a group, which makes it possible to select the destination efficiently.
In the present invention according to a third aspect, by using the current position of the vehicle as a reference point, the destination candidates the user thinks need to be displayed can be displayed individually, which makes it possible to select the destination efficiently.
In the present invention according to a fourth aspect, the destination candidates can be displayed individually based on the positions where the destination candidates are located. This makes it possible to display individually the destination candidates in a freely defined area, such as in the vicinity of one's home or the like, for example.
In the present invention according to a fifth aspect, a computer can be caused to function such that the destination candidates that are grouped and that satisfy a specified condition are displayed individually.

In the following, the drawings are briefly described:
FIG. 1 is a system configuration diagram of a navigation device;
FIG. 2 is a figure for explaining a destination data file;
FIG. 3 is a figure for explaining a character input screen;
FIG. 4 is a figure for explaining a candidate display screen;
FIG. 5 is a figure that shows an example of a display on the candidate display screen;
FIG. 6 is a figure for explaining a modified example of the candidate display screen;
FIG. 7 is a flowchart for explaining a destination candidate display procedure;
FIG. 8 is a flowchart for explaining a modified example of the destination candidate display procedure; and
FIG. 9 shows figures for explaining a known example.

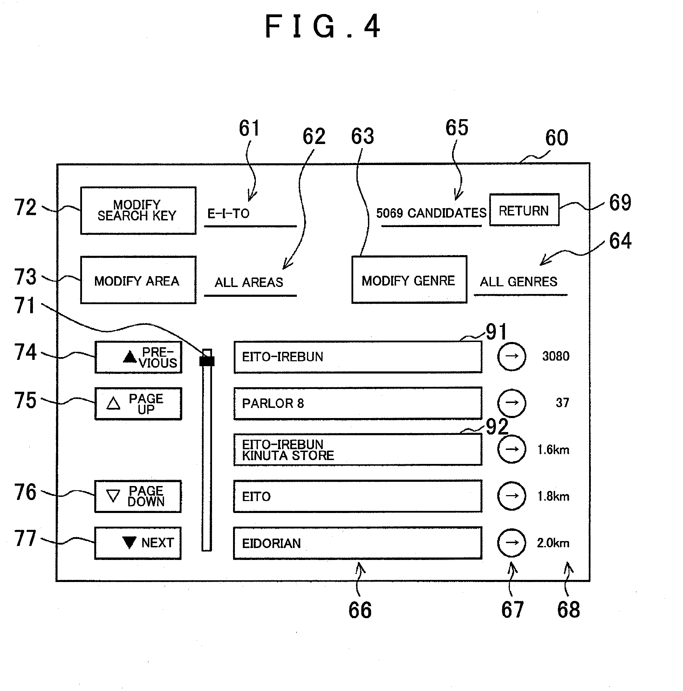

(1) Overview of an embodiment
A navigation device displays destination candidates that are chain stores by a group display on a candidate display screen 60 (FIG. 4).
However, in the case of a destination candidate that satisfies a specified extraction condition, such as being within a specified distance from the position of the vehicle, being closest to the position of the vehicle, or the like, the destination candidate is displayed separately in an ordinary manner, even if it would otherwise be displayed by a group display under a representative name.
For example, in FIG. 4, stores that are affiliates of an Eito-Irebun chain are displayed as a group display in a group display 91 that says "Eito-Irebun". However, an Eito-Irebun Kinuta Store, which is an Eito-Irebun affiliate that satisfies a specified condition, is displayed by an ordinary display 92.

Thus the navigation device displays the chain stores as a group entry, but by individually displaying a store that satisfies a specified extraction condition, such as being the chain store that is closest, the navigation device can omit superfluous operations. Even in the case of a search for destination candidates that are not chain stores, the search can be simplified because the number of candidates listed does not become inordinately large.

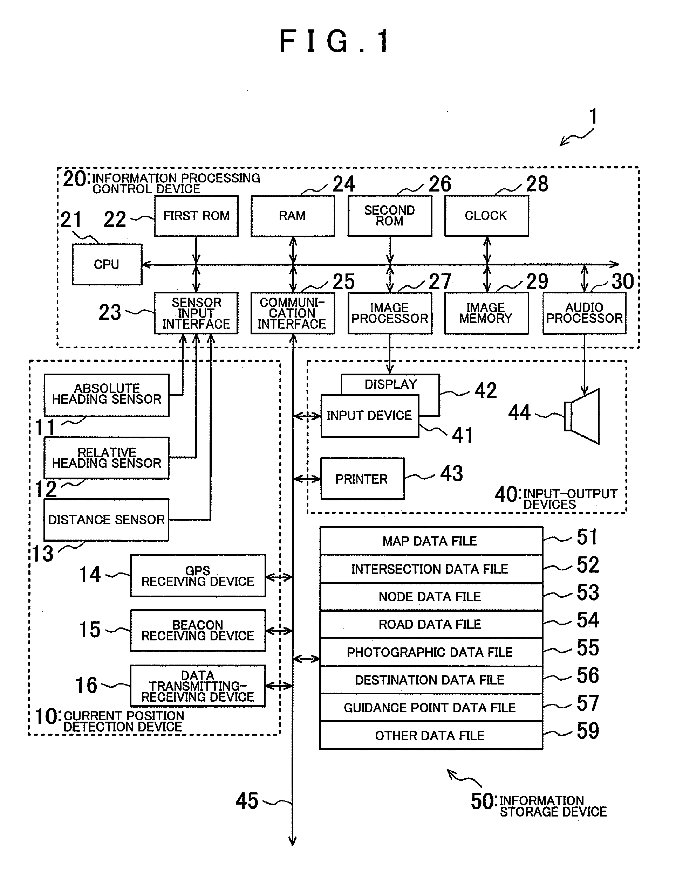

(2) Details of the embodiment
FIG. 1 is a system configuration diagram of the navigation device 1 in which the destination input device and the destination input program according to the present embodiment are used.
The navigation device 1 is installed in a vehicle and, as shown in FIG. 1, includes a current position detection device 10, an information processing control device 20, input-output devices 40, and an information storage device 50.
A configuration of the current position detection device 10, which functions as a current position acquisition unit, will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A GPS receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS information, information on traffic congestion, information on the vehicle's current position, parking information, and the like.

A data transmitting-receiving device 16 is a device that utilizes a telephone circuit or radio waves to perform communication and exchange information with other devices outside the vehicle.
For example, the data transmitting-receiving device 16 may be used in a variety of ways, such as for a car telephone, ATIS (Advanced Traveler Information System), VICS (Vehicle Information and Communication System), GPS route correction, inter-vehicle communication, and the like, and is capable of inputting and outputting information that relates to the operation of the vehicle.

The information processing control device 20 performs calculations and control based on information that is input from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The configuration of the information processing control device 20 is described below.
A central processing unit (CPU) 21 performs overall calculations and control for the entire navigation device 1.
A first ROM 22 stores programs that are related to navigation, specifically navigation programs that are related to a destination input process that uses a group display of chain stores according to the present embodiment, to current position detection, to route searching, to displayed guidance, and the like.
A sensor input interface 23 is a unit that receives an input from the current position detection device 10.

A RAM 24 stores information that a user inputs, such as an input from an input device 41 that is described later, as well as destination information, information on a point that the vehicle passes, and the like. The RAM 24 is also a storage unit for storing the results of calculations that the CPU 21 makes based on the information that is input by the user, route search results, and map information that is read in from the information storage device 50.
Furthermore, in the destination input process according to the present embodiment, the destination names, the representative names for the chain stores, and the like are stored as destination candidates in the RAM 24.
A communication interface 25 is a unit that inputs and outputs information from the current position detection device 10, particularly information that is acquired from outside the vehicle.

A second ROM 26 stores programs that are related to navigation, specifically a navigation program that is related to voice guidance.
An image processor 27 is a processing unit that takes vector information that is processed by the CPU 21 and processes it into image information.
A clock 28 keeps time.
An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be a touch panel that is provided on the face of the display 42, a touch switch, a joystick, a key switch, or the like.
A map of the area around the current position, various types of operation screens, and a driving route to the destination are displayed on the display 42.
Also displayed on the display 42 are operation screens, such as a character input screen for inputting the search characters that are used in the destination input process according to the present embodiment, a candidate display screen that displays a list of search candidates (destination candidates), and the like. Touching a position that corresponds to an item or the like that is displayed on an operation screen causes the item in the touched position to be input from the touch panel that is provided on the screen of the display 42.

The information storage device 50 is connected to the information processing control device 20 through a transmission route 45.
The information storage device 50 stores a map data file 51, an intersection data file 52, a node data file 53, a road data file 54, a photographic data file 55, a destination data file 56, a guidance point data file 57, and an other data file 59.
The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is not added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like. The guidance point data file 57 stores guidance data on geographical points where guidance is required, such as the content of a guidance display sign that is installed on a road, guidance for a branching point, and the like.

The destination data file 56 stores the destination data for use in the destination searches, such as data on major tourist areas, buildings, facilities, locations such as companies, sales offices, and the like that are listed in telephone directories and that can be selected as destinations, and the like.
The destination data includes search keys (phonetic representations of names) and information on facilities. The information on the facilities includes names, coordinates, telephone numbers, additional information, and the like. The coordinates are x and y coordinates that are derived from the latitudes and longitudes of the destinations. The additional information is detailed data that is related to the destinations.
For facilities that are chain stores, the destination data includes data that links the facilities with one another and groups them, and also includes a representative name for the group.

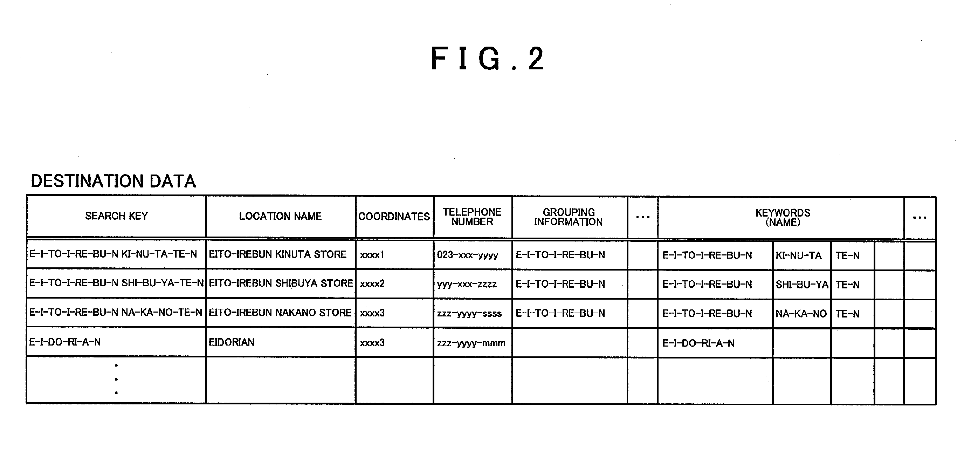

FIG. 2 is a figure that shows an example of a logical structure of the destination data file 56.
The destination data file 56 specifies each of the destination candidates in terms of a search key, a location name, coordinates, a telephone number, grouping information, keywords, and the like.

The location name is a character string that describes the destination candidate and is used in displaying the search results on the candidate display screen 60, which is described later.
The search key is the phonetic representation of the location name.
There are two methods for setting a search term in the navigation device 1. The first method is character input, where the user sets the search term by inputting characters directly. The second method is keyword input, where the user sets the search term by selecting a keyword that has been prepared in advance. In a case where the search term is input as characters, the search is conducted for a character string that corresponds to the search key.

Note that in the present embodiment, the search operates such that it finds names that start with a character string that matches the search key. However, the search may also operate such that, for example, the search term "su-pa-e-i-to" is divided into the segments "su-pa-" and "e-i-to", which are then stored in memory. Any name that matches one of the segments, such as "e-i-to", for example, is treated as a match for the search term "su-pa-e-i-to".

The coordinates are coordinate values for the location, such as the latitude and the longitude or the like. The telephone number is the telephone number of the facility at the location.
The navigation device 1 can calculate the distance from the vehicle to the destination candidate based on the coordinates of the current position and the coordinates in the destination data.

The grouping information is information for grouping the destination candidates. It is defined in the form of the phonetic representation of the representative name for the destination candidates.
For example, the destination candidates "Eito-Irebun Kinuta Store", "Eito-Irebun Shibuya Store" and the like are grouped by the phonetic representation of the representative name "e-i-to-i-re-bu-n" in the grouping information.
The grouping information is used such that the names that are grouped are, for example, those that start with a character string that matches the phonetic representation that is input as the search term. For example, if the phonetic representation "e-i-to" is input, it matches the grouping information "e-i-to-i-re-bu-n".
Thus the destination data file 56 functions as a destination candidate storage unit that stores a plurality of destination candidates, including the destination candidates that are grouped.

A character string that is displayed as a search result that corresponds to the grouping information is also stored in association with the grouping information in the destination data file 56, although it is not shown in FIG. 2.
For example, "Eito-Irebun" is stored as a character string to be displayed for the grouping information "e-i-to-i-re-bu-n", and "Eito-Irebun" is displayed as the display for the group.

The keywords are keywords that are set for the location name. The keywords are set for the three attributes of name, address, and genre. Note that in FIG. 2, the keywords for the name are shown, but the keywords that pertain to the address and the genre have been omitted.
The user can search for destinations by genre by selecting a genre and the associated keywords.

Next, the destination input process according to the present embodiment will be explained.

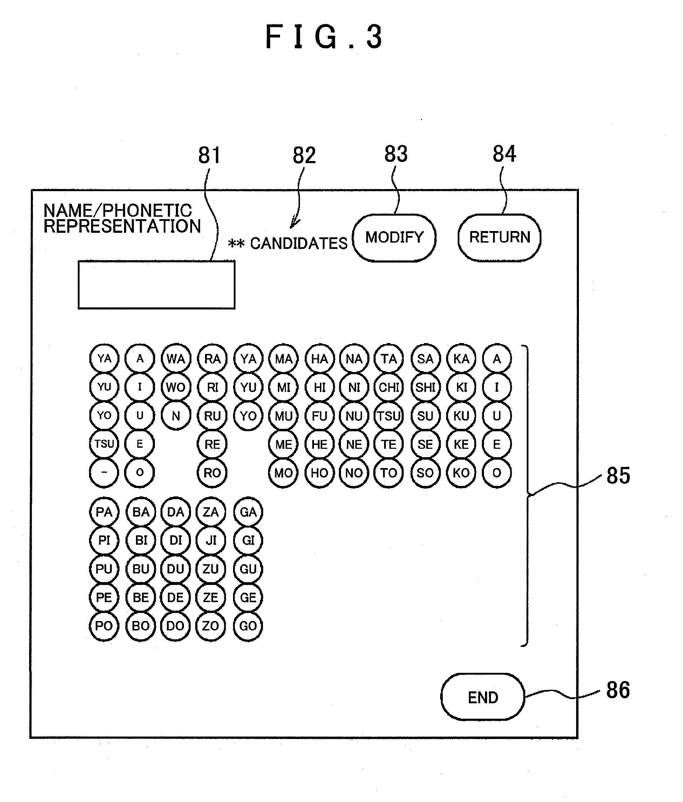

FIG. 3 shows the character input screen that is displayed on the display 42 during the destination input process.
As explained above, the touch panel that serves as the input device 41 is provided on the face of the display 42. When the user touches a button that is displayed on the display 42, information that corresponds to the touched button is input to the navigation device 1.
A fixed frame of the input device 41 is provided around the outer edge of the display 42, although it is not shown in the drawings. A destination setting button and a map button are provided in the form of pushbuttons (hardware keys) that physically exist in an upper area of the fixed frame. The map button is used to display a map of the area around the current position.

When the destination setting button is selected, the information processing control device 20 starts the destination input process and displays the character input screen that is shown in FIG. 3 on the display 42.
Note that the destination that is set by the destination input process according to the present embodiment is used for the route search and is also used when the selected destination and the candidate destinations in the vicinity of the current position are displayed on the map screen.

As shown in FIG. 3, the character input screen includes a character input space 81, a number of candidates space 82, a Modify button 83, a Return button 84, an input keyboard 85, and an End button 86.

The character input space 81 is a space that displays characters that are input as a search key in the order in which they are input.
The input keyboard 85 includes character buttons for inputting the characters of the Japanese syllabary. A numeric keypad and a function key may also be displayed.

The number of candidates space 82 displays the number of candidate locations (the destination data items) that are found by using the characters that are displayed in the character input space 81 as the search key.
The Modify button 83 is used to change the characters that are displayed in the character input space 81 after the input is complete.

The Return button 84 is a button for returning to the state prior to the last operation.
The End button 86 is a button for indicating the end of the input of the search key. When the End button 86 is selected, the display on the display 42 changes to the candidate display screen 60, which is shown in FIG. 4.

When the user performs the character input on the character input screen by touching in order the characters on the input keyboard 85 that correspond to the intended search key, the information processing control device 20 displays the characters that have been input in order in the character input space 81.
The information processing control device 20, using the characters that have been input as the search key, takes the destination data items that have been found and stores them in the RAM 24.

That is, the information processing control device 20 displays in order in the character input space 81 the characters that the user touches on the input keyboard 85. The information processing control device 20 also selects from the destination data file 56, as the destination candidates, the location names whose search keys match the characters that are displayed in the character input space 81.
The navigation device 1 repeats the process of selecting the location names every time the user changes the characters that are input in the character input space 81.

For example, if the user inputs the character "e" from the input keyboard 85, the information processing control device 20 displays the character "e" that was input in the character input space 81. The information processing control device 20 then refers to the search key "e" in the destination data file 56, selects in order the location names that have "e" as the first character in their search keys, and stores those location names as the destination candidates.

If the character "i" is then input from the input keyboard 85, the information processing control device 20 changes the display in the character input space 81 from "e" to "e-i", the characters that have been input.
The information processing control device 20 then selects from among the destination candidates it has already selected the location names that have "e-i" as the first two characters in their search keys.

Thereafter, the information processing control device 20 continues to narrow down the destination candidates in the same manner according to the characters that are displayed in the character input space 81.
When the End button 86 on the character input screen is touched, the information processing control device 20 shifts the display on the display 42 to the candidate display screen 60 and displays a list of the destination candidates that is narrowed down according to the area and the genre.

FIG. 4 is shows the candidate display screen 60.
As shown in FIG. 4, a search key space 61, an area input space 62, a Modify Genre button 63, a genre input space 64, a total number of candidates space 65, search results display spaces 66, detail display buttons 67, comment spaces 68, a Return button 69, a scroll bar 71, a Modify Search Key button 72, a Modify Area button 73, a Previous button 74, a Page Up button 75, a Page Down button 76, and a Next button 77 are displayed on the candidate display screen 60.

The search key space 61 is a space that displays the search key for which the search is performed. The characters that were input in the character input space 81 at the point in time when the End button 86 was selected on the character input screen shown in FIG. 3, that is, the characters that were displayed in the character input space 81, are displayed as the search key.
The Modify Search Key button 72 is a button that is touched in order to modify the characters that are displayed in the search key space 61. When the Modify Search Key button 72 is touched, the display returns to the character input screen, and it becomes possible to modify the characters that are displayed in the search key space 61.

The area input space 62 is a space for setting a search area within which the search for the destination data will be performed. For example, the area may be set to "All areas" to define the entire country as the search area, and the area may also be set to a smaller area, such as "Osaka Prefecture", Aichi Prefecture", "Tokyo Metropolitan", or the like.
A search area setting menu is provided as a part of the destination input process, although it is not shown in the drawings. The user can therefore select the desired search area.
The navigation device 1 uses the destination data for the area that is set in the area input space 62 and narrows down the destination candidates in the area according to the search key.
The Modify Area button 73 is a button that is touched in order to modify the search area that is set in the area input space 62. When the Modify Area button 73 is touched, it becomes possible to modify the search area that is set in the area input space 62. After the search area is modified, a search of the modified area is performed using the search key that is displayed in the search key space 61.

The genre input space 64 is a space for setting a genre within which the search for the destination data will be performed. For example, the genre may be set to "all genres", "leisure", "restaurants", "hotels", or the like.
A genre setting menu is provided as a part of the destination input process, although it is not shown in the drawings. The user can therefore select the desired genre.
The navigation device 1 uses the destination data for the genre that is set in the genre input space 64 and narrows down the destination candidates in the genre according to the search key.
The Modify Genre button 63 is a button that is touched in order to modify the genre that is set in the genre input space 64. When the Modify Genre button 63 is touched, it becomes possible to modify the genre that is set in the genre input space 64. After the genre is modified, a search of the modified genre is performed using the search key that is displayed in the search key space 61.
By using the search area and the genre as described above to narrow down the destination data that is the object of the search, the navigation device 1 reduces the amount of the search processing.

The total number of candidates space 65 displays the total number of the destination candidates that have been selected. The total number of the destination candidates is the sum of the number of the destination candidates that were selected by an ordinary search and the number of the destination candidates that were selected by a fuzzy search. Note that the numbers of the destination candidates that were selected by each of the searches may also be displayed separately.

The search results display spaces 66 are spaces for displaying the names of the selected destination candidates in list form.
There are two methods for displaying the destination candidates in the search results display spaces 66. The first method is an ordinary display that displays individual destination candidates, while the second method is a group display that displays a group of destination candidates as a group under a representative name.

As a rule, the navigation device 1 uses the ordinary display for the destination candidates that are not grouped by the group information in the destination data file 56, and uses the group display under the representative name for the destination candidates that are grouped.
However, for a grouped destination candidate that satisfies a specified extraction condition, the navigation device 1 selects the destination candidate from the group and displays it separately using the ordinary display.

The extraction condition may be, for example, that the destination candidate is located within a specified distance (for example, two kilometers) from the current position of the vehicle, that the destination candidate is the closest to the current position, or that the destination candidate is the closest in the direction that the vehicle is heading. Moreover, the extraction condition can be varied dynamically according to the geographical distribution of the destination candidates that belong to a given genre or group, or according to the number of the selected candidates.

Thus, a destination candidate that is a chain store can be displayed as a group under a representative name, but if the destination candidate is located within a specified distance from the current position, for example, it can be displayed separately using the ordinary display, even though it is a store that is included in a given group.
In the example in FIG. 4, the Eito-Irebun chain stores are displayed by the group display 91 in the search results display spaces 66.
However, the Eito-Irebun Kinuta Store, which is one of the Eito-Irebun stores, is displayed by the ordinary display 92, because it satisfies an extraction condition.

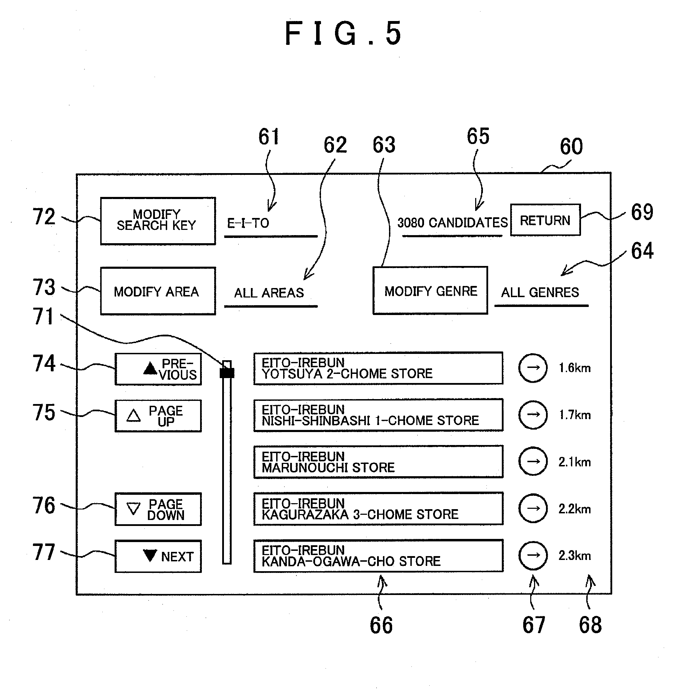

If a destination candidate that is displayed by the ordinary display in the search results display spaces 66 is selected (touched), the destination data for the selected destination candidate is input, and the selected destination candidate is established as the destination.
On the other hand, if a group display is touched, the individual destination candidates in the group are displayed by ordinary displays in the search results display spaces 66, as shown in FIG. 5, which is described later. Then, if one of the ordinary displays is touched, the destination data for the selected destination candidate is input, and the selected destination candidate is established as the destination.

Note that after the group display is touched, the destination candidates that were displayed by the ordinary displays in the search results display spaces 66 are no longer displayed.
In other words, when the group display "Eito-Irebun" is touched, the chain stores that belong to Eito-Irebun are displayed by the ordinary displays, except for the Eito-Irebun Kinuta Store, which was previously displayed.

One of the detail display buttons 67 is displayed for each of the destination candidates. When the user touches the detail display button 67 for the desired destination candidate, the navigation device 1 searches the destination data file 56 for the facilities information that is associated with the selected destination candidate and displays the facilities information on the display 42.
In a case where the display in one of the search results display spaces 66 is a group display, for example, the comment space 68 is used to display the number of the destination candidates in the group. In the case of any ordinary display, the comment space 68 is used to display the distance from the current position.
The Return button 69 is a button for returning to the character input screen.

The Previous button 74 and the Next button 77 are buttons for respectively scrolling up and scrolling down within the search results display spaces 66, one display at a time.
The Page Up button 75 and the Page Down button 76 are buttons for respectively scrolling up and scrolling down within the search results display spaces 66, one page at a time.

The scroll bar 71 indicates the position of the currently displayed destination candidates among all of the destination candidates. Scrolling up and scrolling down can be done by touching and dragging the scroll bar 71.

FIG. 5 is the screen that is displayed in a case where the "Eito-Irebun" display in the search results display spaces 66 is selected on the candidate display screen 60 in FIG. 4.
The selection of the "Eito-Irebun" display can be performed by touching the "Eito-Irebun" display.
Alternatively, the selection of the "Eito-Irebun" display can be performed by touching the detail display button 67 that corresponds to the "Eito-Irebun" display.

Thus the navigation device 1 is provided with a group selection unit that selects a group that is displayed by a group display. When the group display is selected, the destination candidates that belong to the group are displayed individually by ordinary displays.

As shown in FIG. 5, when the group display "Eito-Irebun" is selected, the destination candidates that are grouped by the grouping information "e-i-to-i-re-bu-n" (that is, the Eito-Irebun chain stores) are displayed in list form, and the total number of candidates space 65 is updated accordingly.

However, on this screen (FIG. 5), the Eito-Irebun Kinuta Store is excluded from the destination candidates that are grouped by the grouping information "e-i-to-i-re-bu-n", because the Eito-Irebun Kinuta Store was already displayed by an ordinary display on the preceding screen (FIG. 4).
Note that the screen may also be configured such that even if a destination candidate has already been displayed by an ordinary display on the preceding screen, it is re-displayed if it belongs to the group in the selected group display.
In that case, when the group display "Eito-Irebun" is selected, the Eito-Irebun Kinuta Store is re-displayed by an ordinary display.

When the user touches the desired destination candidate in the search results display spaces 66, the navigation device 1 sets that destination candidate as the destination.
Thus the navigation device 1 is provided with a destination candidate selection unit that selects a destination candidate that is displayed individually by an ordinary display, as well as with a destination setting unit that sets the selected destination candidate as the destination.
The navigation device 1 is also provided with a route search unit that searches for a route to the destination that has been set as described above, as well as with a guidance unit that guides the vehicle along the route that is found.

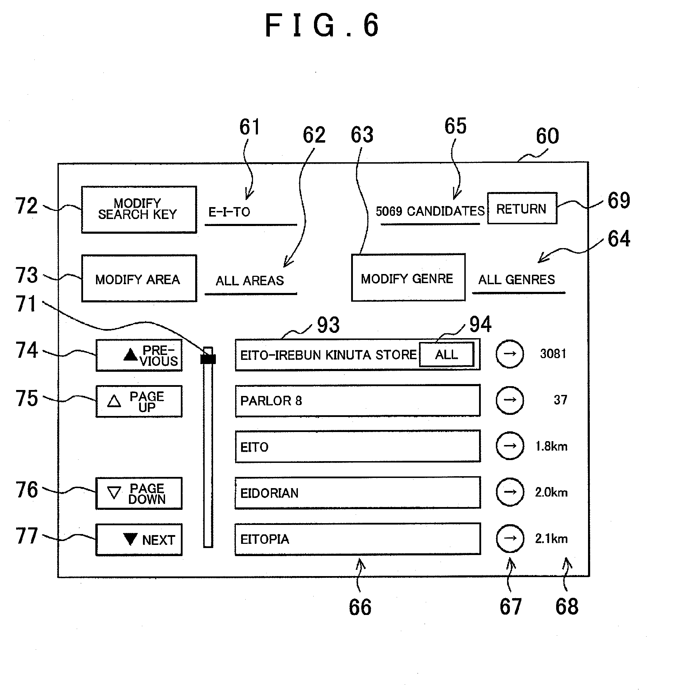

FIG. 6 is a figure for explaining a modified example of the candidate display screen 60.
In the modified example, a display space is omitted by combining the chain store group display with the ordinary display for the individually displayed chain store.
In the example in FIG. 6, a group display "All" is superimposed on an ordinary display for the Eito-Irebun Kinuta Store.
That is, if the ordinary display 93 is touched, the Eito-Irebun Kinuta Store is established as the destination, and if the group display 94 is touched, the stores that belong to the Eito-Irebun chain, with the extraction of the Eito-Irebun Kinuta Store, are displayed by ordinary displays in the search results display spaces 66.

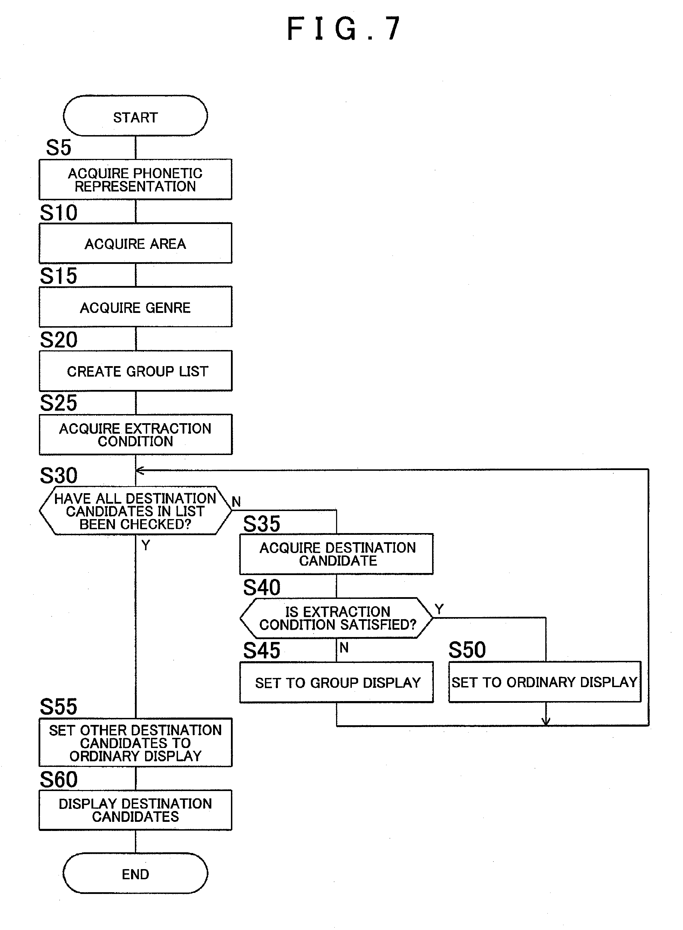

Next, a destination candidate display procedure that is executed by the navigation device 1 that is configured as described above will be explained using a flowchart in FIG. 7.
The processing that is described below is performed by the information processing control device 20 in accordance with a specified program.
The navigation device 1 acquires the characters that will show the phonetic representation on the character input screen (step 5). The navigation device 1 then uses the characters to select the destination candidates from the destination data file 56.
The navigation device 1 is thus provided with a search term input unit that inputs the search term (the phonetic representation) that is used to search for the destination candidates.

When the End button 86 is touched on the character input screen, the navigation device 1 shifts to the candidate display screen 60 (FIG. 4) and accepts inputs for the area and the genre.
Next, the navigation device 1 acquires an area that is input in the area input space 62 (step 10) and also acquires a genre that is input in the genre input space 64 (step 15).

Once the area and the genre are acquired, the navigation device 1 selects from among the destination candidates that were selected on the character input screen those destination candidates that match the area and the genre.
Next, the navigation device 1 creates a group list by listing the selected destination candidates for which the grouping information has been set (step 20).
Thus the navigation device 1 is provided with a search unit that searches among the destination candidates that are stored in the destination data file 56 for the destination candidates that correspond to the search term.

Next, the navigation device 1 acquires an extraction condition for selecting from the group list a destination candidate to be displayed by the ordinary display (step 25).
The extraction condition may be, for example, that the distance from the position of the vehicle to the destination candidate is within a specified distance (for example, two kilometers).

Next, the navigation device 1 determines whether or not all of the destination candidates in the group list have been checked in order to set their display formats (group display, ordinary display) (step 30).
In a case where a destination candidate exists that has not been checked (NO at step 30), the navigation device 1 acquires one destination candidate from the group list (step 35) and determines whether or not the destination candidate satisfies the extraction condition that was acquired at step 25 (step 40).

For example, in a case where the extraction condition is that the distance from the position of the vehicle to the destination candidate is within a specified distance, the navigation device 1 computes the distance from the current position to the destination candidate and then determined whether or not the distance is within the specified distance.
Thus the specified extraction condition can be defined, for example, by using the positional relationship between the position where the destination candidate is located and the current position of the vehicle that is acquired by the current position detection device 10.
Note that this is only one example. For example, the user may also designate the position of his home, then freely set the specified extraction condition based on the positions where the destination candidates are located such that the destination candidates in the vicinity of the user's home are selected.

In a case where the destination candidate satisfies the extraction condition (YES at step 40), the navigation device 1 sets the destination candidate to be displayed by the ordinary display (step 50), then returns to step 30.
On the other hand, in a case where the destination candidate does not satisfy the extraction condition (NO at step 40), the navigation device 1 sets the destination candidate to be displayed by the group display (step 45), then returns to step 30.

In a case where all of the destination candidates have been checked (YES at step 30), the navigation device 1 sets the other destination candidates for which the grouping information has not been set to be displayed by the ordinary displays (step 55).

Next, the navigation device 1 displays in the search results display spaces 66 (FIG. 4) the destination candidates that were found by the search described above. The candidates that have been set to be displayed by the group display are displayed by the group display, while the destination candidates that have been set to be displayed by the ordinary displays are displayed by the ordinary displays (step 60).
Thus the navigation device 1 is provided with a display unit that, in a case where the destination candidates that were found by the search are grouped by the grouping information, uses a group display to display the destination candidates under the representative name in the search results display spaces 66. In a case where the destination candidates that were found by the search are not grouped, the display unit uses the ordinary displays to display the destination candidates individually in the search results display spaces 66. The display unit also uses the ordinary display to display individually in the search results display spaces 66 a destination candidate that belongs to a group, but that satisfies a specified condition (the extraction condition).

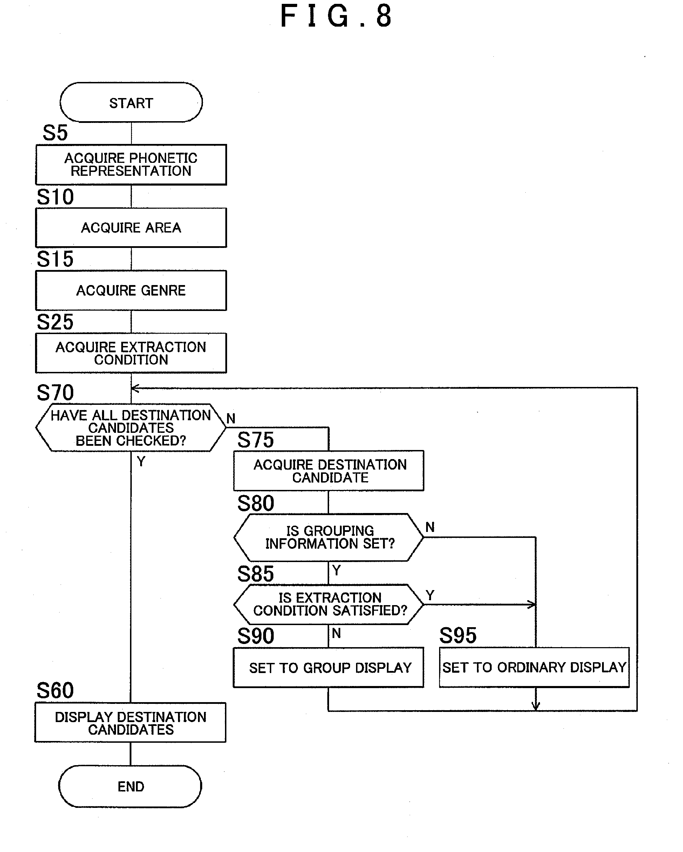

Next, a modified example of the destination candidate display procedure will be explained using a flowchart in FIG. 8.
The steps in the flowchart that are the same as in FIG. 7 are assigned the same numbers, and the explanation of those steps will be simplified or omitted.
The navigation device 1 acquires the phonetic representation that is input, as well as the area and the genre (steps 5 to 15), and then acquires the extraction condition (step 25).
Next, the navigation device 1 selects from the destination data file 56 the destination candidates that correspond to the phonetic representation, the area, and the genre, then performs processing of the selected destination candidates.

First, the navigation device 1 checks whether the display formats have been set for all of the selected destination candidates (step 70).
In a case where a destination candidate exists that has not been checked (NO at step 70), the navigation device 1 acquires one unchecked destination candidate (step 75) and determines whether or not the grouping information is set for the destination candidate (step 80).

In a case where the grouping information is not set for the destination candidate (NO at step 80), the navigation device 1 sets the destination candidate to be displayed by the ordinary display (step 95), then returns to step 70.
On the other hand, in a case where the grouping information is set for the destination candidate (YES at step 80), the navigation device 1 determines whether or not the destination candidate satisfies the extraction condition (step 85).

In a case where the extraction condition is satisfied (YES at step 85), the navigation device 1 sets the destination candidate to be displayed by the ordinary display (step 95), then returns to step 70. In a case where the extraction condition is not satisfied (NO at step 85), the navigation device 1 sets the destination candidate to be displayed by the group display (step 90), then returns to step 70.
In a case where all of the destination candidates have been checked (YES at step 70), the navigation device 1 displays the destination candidates in the search results display spaces 66 (FIG. 4) in accordance with the display formats that have been set (step 60).

The present embodiment that is described above can provide the effects described below.
(1) Grouping the chain stores makes it possible to display the chain stores in a group display under the representative name and also makes it possible to use the ordinary display to display a chain store that satisfies the specified extraction condition.
(2) The user can use the extraction condition to select the chain stores he thinks need to be selected and to display them using the ordinary displays, even in a case where a large number of stores belong to the chain.
(3) In order to use the ordinary display to display a chain store that satisfies the extraction condition, the user can directly set the chain store as the destination. This makes it unnecessary to use the representative name to set the destination, so it can reduce the number of operations.

As described above, a navigation device uses a group display to display destination candidates that are chain stores as a group on a candidate display screen. However, where a destination candidate satisfies a specified extraction condition, such as being within a specified distance from a current position of a vehicle, being closest to a current position of a vehicle, or the like, the destination candidate is selected and displayed by an ordinary display, even though it would otherwise be displayed by a group display. For example, stores that are affiliates of an Eito-Irebun chain are displayed by a group display that says "Eito-Irebun". However, an Eito-Irebun Kinuta Store, which is an Eito-Irebun affiliate that satisfies a specified condition, is displayed by an ordinary display. Thus the navigation device displays the chain stores as a group, but by individually displaying a store that satisfies a specified extraction condition can be displayed without being grouped.

## Claims

1. A destination selection support device, comprising:
a destination candidate storage unit (56) that is adapted to store a plurality of destination candidates that includes destination candidates that are grouped;
a search term input unit (41) for inputting a search term that is used to search for the destination candidates;
a search unit (20) that is adapted to search among the destination candidates that are stored for the destination candidates that correspond to the search term; and
a display unit (27, 42) that is adapted to, in a case where the destination candidates that are found by the search belong to a group, display the destination candidates such that they are represented by the group, and in a case where the destination candidates that were found by the search do not belong to a group, display the destination candidates individually, wherein
the display unit is adapted to display individually the destination candidates that belong to the group and that satisfy a specified condition.

2. The destination selection support device according to claim 1, further comprising:
a group selection unit that is adapted to select a group that is displayed, wherein
the display unit is adapted to display individually the destination candidates that belong to the selected group.

3. The destination selection support device according to either one of claims 1 and 2, further comprising:
a current position acquisition unit (10) that is adapted to acquire a current position, wherein
the specified condition is defined by using a positional relationship between the current position that is acquired and a position where the destination candidate is located.

4. The destination selection support device according to either one of claims 1 and 2, wherein
the specified condition is defined based on a position where the destination candidate is located.

5. A destination selection support program for a computer comprising software portions that causes the computer, when the program is run on the computer, to function as:
a search term input unit for inputting a search term that is used to search for destination candidates;
a search unit that searches for the destination candidates that correspond to the search term among the destination candidates that are stored in a destination candidate storage unit that stores a plurality of the destination candidates that includes the destination candidates that are grouped;
a display unit that, in a case where the destination candidates that are found by the search belong to a group, displays the destination candidates such that they are represented by the group, and in a case where the destination candidates that were found by the search do not belong to a group, displays the destination candidates individually, wherein
the display unit displays individually the destination candidates that belong to the group and that satisfy a specified condition.

6. A destination selection support method, comprising
inputting a search term that is used to search for destination candidates;
searching for the destination candidates that correspond to the search term among the destination candidates that are stored in a destination candidate storage unit that stores a plurality of the destination candidates that includes the destination candidates that are grouped;
displaying, in a case where the destination candidates that are found by the search belong to a group, the destination candidates such that they are represented by the group, and in a case where the destination candidates that were found by the search do not belong to a group, displaying the destination candidates individually, wherein
the destination candidates that belong to the group and that satisfy a specified condition are diplayed individually.
